# EUROPÄISCHE PATENTSCHRIFT

(11) **EP 3 561 322 B1**
(45) Veröffentlichungstag und Bekanntmachung des Hinweises auf die Patenterteilung: **17.03.2021**
(21) Anmeldenummer: 19168296.2
(22) Anmeldetag: 10.04.2019
(51) Int. Cl.: F16C 11/06, F16B 5/02, B60N 2/015, B64D 11/06

(54) **BEFESTIGUNGSSYSTEM ZUM BEFESTIGEN VON EINBAUELEMENTEN IN EINER KABINE EINES FAHRZEUGS**
FIXING SYSTEM FOR FIXING INSTALLATION ELEMENTS IN A CABIN OF A VEHICLE
SYSTÈME DE FIXATION PERMETTANT DE FIXER DES ÉLÉMENTS DE MONTAGE DANS UNE CABINE DE VÉHICULE

(30) Priorität: 25.04.2018 DE 102018109995
(43) Veröffentlichungstag der Anmeldung: 30.10.2019
(73) Patentinhaber: Airbus Operations GmbH, 21129 Hamburg (DE)
(72) Erfinder: Benthien, Hermann, 21129 Hamburg (DE); Poppe, Andreas, 21129 Hamburg (DE)

(56) Entgegenhaltungen:
- EP-A2- 2 538 035
- WO-A1-02/090786
- GB-A- 920 925
- US-A- 2 853 112
- US-A- 5 795 122
- US-A1- 2010 066 152

## Beschreibung

### TECHNISCHES GEBIET

Die Erfindung betrifft ein Befestigungssystem zum Befestigen von Einbauelementen in einer Kabine eines Fahrzeugs. Ferner betrifft die Erfindung eine Kabine für ein Fahrzeug, in der ein Einbauelement mit einem solchen Befestigungssystem befestigt ist. Des Weiteren betrifft die Erfindung ein Fahrzeug, insbesondere ein Flugzeug, welches mit einer solchen Kabine ausgestattet ist.

### HINTERGRUND DER ERFINDUNG

Fahrzeuge, die dem Transport von Passagieren dienen, weisen üblicherweise eine Vielzahl von Einbauelementen auf, die unterschiedliche Funktionen bereitstellen. Diese werden je nach Wunsch oder Bedarf in einer Kabine des Fahrzeugs angeordnet und so befestigt, dass während allen denkbaren Bewegungen des Fahrzeugs die masse- und trägheitsbedingten Lasten der Einbauelemente sicher in die Fahrzeugstruktur eingeleitet werden können. Folglich ist eine ausreichend feste und gleichzeitig statisch bestimmte Lagerung für jedes Einbauelement vorzusehen. Je nach Art und Ausführung des Einbauelements kann eine spezifische Lösung für eine Befestigungsvorrichtung eingesetzt werden.

Um individuelle Ausstattungswünsche unterschiedlicher Betreiber von Fahrzeugen derselben Bauart befriedigen zu können, werden oft modulare Einbauelemente verwendet. Zur Vermeidung einer vollständig variablen Anordnung von Befestigungsvorrichtungen an einer Primärstruktur des betreffenden Fahrzeugs ist die Schaffung kontinuierlicher mechanischer Schnittstellen bekannt, die ohne Beeinflussung der Primärstruktur eine individuelle Anordnung von Befestigungsvorrichtungen erlaubt. Für eine Individualisierung der Anordnung von Einbauelementen ist folglich die Entkopplung von der Primärstruktur des Fahrzeugs ein geeigneter Weg.

Es sind etwa Befestigungssysteme bekannt, die auf einer Schienenstruktur basieren, welche eine mit einer Fahrzeugstruktur verbundene Schiene aufweist, an der die Einbauelemente über geeignete Beschläge fixierbar sind. Es sind Varianten bekannt, bei denen Fußbodenschienen, welche insbesondere für die Befestigung von Passagiersitzen Verwendung finden, zur Befestigung von Einbauelementen am Boden eingesetzt werden.

US 2010/066152 A1 zeigt etwa ein bekanntes Befestigungssystem. EP 3 266 705 Alzeigt etwa ein Tragsystem für eine Kabine eines Fahrzeugs zum Anordnen von Einbauelementen.

### ZUSAMMENFASSUNG DER ERFINDUNG

Der Erfindung liegt die Aufgabe zugrunde, ein Befestigungssystem vorzuschlagen, welches eine entkoppelte Befestigung eines Einbauelements an einer Primärstruktur erlaubt und flexibel unterschiedliche Relativpositionen zwischen einem Fixierpunkt in der Kabine und dem Einbauelement auch bei toleranzbehafteten Einbaupositionen gewährleisten kann.

Die Aufgabe wird gelöst durch ein Befestigungssystem zum Befestigen von Einbauelementen in einer Kabine eines Fahrzeugs mit den Merkmalen des unabhängigen Anspruchs 1. Vorteilhafte Ausführungsformen und Weiterbildungen sind den Unteransprüchen und der nachfolgenden Beschreibung zu entnehmen.

Es wird ein Befestigungssystem zum Befestigen von Einbauelementen in einer Kabine eines Fahrzeugs, mit einem Befestigungselement und mindestens einer Befestigungsvorrichtung vorgeschlagen, die Befestigungsvorrichtung aufweisend ein Flanschgehäuse mit einem darin ausgebildeten Innenraum, ein Verschlusselement, eine in den Innenraum des Flanschgehäuses einsetzbares Hohlkugelelement, einen in das Hohlkugelelement einsetzbaren Kugeleinsatz mit einer erste Eingriffsmittel aufweisenden Öffnung, wobei der Innenraum des Flanschgehäuses eine erste sphärische Lagerfläche aufweist, die zum Verschwenken des Hohlkugelelements mit einer äußeren Oberfläche des Hohlkugelelements korrespondierend ausgebildet ist, wobei eine erste Führungseinrichtung das Verschwenken ausschließlich um eine erste Schwenkachse erlaubt, wobei das Hohlkugelelement innenseitig eine zweite sphärische Lagerfläche aufweist, die zum Verschwenken des Kugeleinsatzes mit einer äußeren Oberfläche des Kugeleinsatzes korrespondierend ausgebildet ist, wobei eine zweite Führungseinrichtung das Verschwenken ausschließlich um eine zweite Schwenkachse erlaubt, wobei das Verschlusselement den Innenraum zumindest abschnittsweise derart verschließt, dass das Hohlkugelelement in dem Innenraum gehalten wird, wobei das Befestigungselement in den Kugeleinsatz einsteckbar ist und zweite Eingriffsmittel aufweist, und wobei die ersten und zweiten Eingriffsmittel derart ausgebildet sind, dass das Befestigungselement in einer ersten Drehposition frei in die Öffnung steckbar ist und in einer zweiten Drehposition die ersten und zweiten Eingriffsmittel ineinander eingreifen.

Das Flanschgehäuse bildet eine fest einbaubare Basis für die Befestigungsvorrichtung. Das Flanschgehäuse kann an einem Ende einen Flansch aufweisen, welcher sich insbesondere radial über den übrigen Teil des Flanschgehäuses nach außen erstreckt. Der Flansch kann folglich eine Art Anschlag bilden, bis zu dem das Flanschgehäuse in eine Öffnung einer Boden- oder Wandfläche in der Kabine einsteckbar ist. Bevorzugt weist das Flanschgehäuse einen hohlzylindrischen Gehäuseabschnitt auf, der einseitig mit dem Flansch ergänzt ist.

Das Verschlusselement dient zum Verschließen des Innenraums des Flanschgehäuses, so dass die darin befindlichen, weiter nachfolgend erläuterten Komponenten in dem Innenraum verbleiben. Das Verschlusselement ist bevorzugt, jedoch nicht notwendigerweise, an einem Ende des Flanschgehäuses positionierbar, welches dem Flansch entgegengesetzt ist. In einem besonders einfachen Fall kann das Verschlusselement als ein Ring oder Deckel ausgebildet sein.

Das in den Innenraum einsetzbare Hohlkugelelement kann als ein ringförmiger Abschnitt einer Kugel ausgeführt sein, wobei die jeweiligen Kappen der Kugel fehlen. Das Hohlkugelelement ist nicht massiv ausgeführt, sondern umschließt ebenfalls einen Hohlraum.

Der Innenraum des Flanschgehäuses kann das Hohlkugelelement mithilfe der ersten sphärischen Lagerfläche schwenkbar lagern. Das Hohlkugelelement kann einen freien Schwenkwinkel um ihre erste Schwenkachse einnehmen, wobei die Ausrichtung des Schwenkwinkels von der ersten Führungseinrichtung abhängt.

Gleichermaßen ist der Kugeleinsatz im Innern des Hohlkugelelements schwenkbar gelagert, wobei der freie Schwenkwinkel des Kugeleinsatzes relativ zu dem Hohlkugelelement von der zweiten Führungseinrichtung abhängt. Insgesamt bilden folglich das Flanschgehäuse, das Hohlkugelelement und der Kugeleinsatz eine Art Kardangelenk, da sich, abhängig von der Ausführung der beiden Führungseinrichtungen, der Kugeleinsatz um zwei Achsen innerhalb des Flanschgehäuses verschwenken lässt.

Durch die Anordnung der Öffnung in dem Kugeleinsatz, in die das Befestigungselement einsteckbar ist, kann die Verschwenkbarkeit des Kugeleinsatzes zum gewünschten Ausrichten des Befestigungselements ausgenutzt werden. Das Befestigungselement ist als ein solches Bauteil zu verstehen, das mit dem zu befestigenden Einbauelement im Eingriff ist und an der Öffnung des Kugeleinsatzes der Befestigungsvorrichtung fixiert wird. Durch die Verschwenkbarkeit des Befestigungselements relativ zu dem Flanschgehäuse einer Befestigungsvorrichtung kann eine gewisse Distanz zwischen einem Befestigungspunkt an dem Einbauelement und der Befestigungsvorrichtung realisiert werden, die strukturfest an dem Fahrzeug positionierbar ist. Dennoch kann jede Kraftrichtung zu einer zuverlässigen, ausreichenden Kraftleitung in die Fahrzeugstruktur genutzt werden.

Neben der freien Ausrichtbarkeit des Kugeleinsatzes in dem Flanschgehäuse ist ein weiterer Vorteil darin zu sehen, dass das Befestigungselement sehr leicht mit der Öffnung und dem Kugeleinsatz verbindbar ist. Hierzu sind die ersten und zweiten Eingriffsmittel vorgesehen, welche zueinander korrespondierend ausgestaltet sind. Wird das Befestigungselement in der ersten Drehposition in die Öffnung eingesteckt und anschließend in die zweite Drehposition gebracht, wird ein Eingreifen der Eingriffsmittel ineinander hervorgerufen. Dies bedeutet, dass der Abstand zwischen dem Einbauelement und der Befestigungsvorrichtung im gewissen Maße variabel ist. Es ist vorgesehen, dass die Eingriffsmittel unabhängig von der Einstecktiefe miteinander in Eingriff geraten, wenn die zweite Drehposition gewählt wird.

Insgesamt kann die erfindungsgemäße Befestigungsvorrichtung daher eine Krafteinleitung aus einer weitgehend beliebigen Position in eine strukturfest angebrachte Befestigungsvorrichtung durchführen und gleichzeitig Mittel zum Ausgleichen von montagebedingten Toleranzen durchführen.

An dieser Stelle sei darauf hingewiesen, dass zum Anbinden des Befestigungselements an dem Einbauelement eine einfache Kugelbuchse ausreichen könnte, die wie ein Hohlkugelelement ausgestaltet ist und schwenkbar gelagert ist. Allerdings ist es insbesondere denkbar und bevorzugt, eine zweite Befestigungsvorrichtung vorzusehen, durch die sich ein gemeinsames Befestigungselement erstreckt. Das Befestigungssystem kann folglich zwei Befestigungsvorrichtungen umfassen, wobei eine an dem Einbauelement angeordnet ist, die andere strukturfest an dem entsprechenden Flächenelement. Durch Ausnutzen der ersten und zweiten Eingriffsmittel in beiden Kugeleinsätzen und dem Befestigungselement kann das Befestigungselement derart mit beiden Kugeleinsätzen verbunden werden, dass sämtliche montagebedingten Toleranzen ausgeglichen werden und die bei der Montage eingenommene Relativposition zwischen dem Einbauelement und einem strukturfesten Punkt starr beibehalten werden.

Weiterhin sei darauf hingewiesen, dass zur festen Verbindung eines Einbauelements mit einem Flächenelement mehrere strukturfeste Punkte und mehrere Anbindungspunkte des Einbauelements einbezogen werden.

In einer vorteilhaften Ausführungsform stehen die erste Schwenkachse und die zweite Schwenkachse senkrecht zueinander. Dadurch wird praktisch ein vollkardanisches Gelenk bereitgestellt, das eine völlig beliebige Stellung des Kugeleinsatzes relativ zu dem Flanschgehäuse ermöglicht. Hierbei ist allerdings anzumerken, dass bevorzugt keine der beiden Schwenkachsen so vorzusehen ist, dass sich die Hohlkugel und/oder der Kugeleinsatz nur um ihre eigene Achse drehen können.

In einer vorteilhaften Ausführungsform stehen die erste Schwenkachse und die zweite Schwenkachse senkrecht zu einer Haupterstreckungsrichtung der Öffnung des Kugeleinsatzes. Damit kann ausgeschlossen werden, dass sich eines dieser Elemente um eine Achse parallel zu dem Befestigungselement drehen lässt. Die Befestigungsvorrichtung erlaubt daher das Einsetzen des Befestigungselements und dessen Fixierung vollkommen ohne die Notwendigkeit, ein Werkzeug zum Halten des Kugeleinsatzes einzusetzen. Insbesondere bei zueinander senkrecht stehenden Schwenkachsen bleibt jedoch vollständig eine völlig beliebige Ausrichtung des Kugeleinsatzes gewährleistet.

Die Befestigungsvorrichtung kann ferner eine Flanschmutter mit einem ersten Außengewinde aufweisen, die in ein erstes Innengewinde des Flanschgehäuses einschraubbar ist, so dass das Flanschgehäuse und die Flanschmutter in einem Ausschnitt eines Flächenbauteils befestigbar sind. Das Anordnen der Befestigungsvorrichtung in einem Flächenbauteil, das heißt einer Wand- oder Bodenfläche, kann daher durch Bereitstellen eines Ausschnitts, das Einsetzen des Flanschgehäuses in den Ausschnitt und das Verspannen des Flanschgehäuses mit der Flanschmutter realisiert werden. Bevorzugt weist die Flanschmutter ebenso einen Flansch auf, der als Absatz oder Anschlag fungiert. Durch Einschrauben der Flanschmutter in das Flanschgehäuse wird folglich ein Randbereich um den Ausschnitt herum zangenartig umgriffen. Das Flanschgehäuse ist dann fest an dem Flächenelement angeordnet und erlaubt eine wirksame Krafteinleitung. Besonders bevorzugt ist die Flanschmutter ebenfalls als ein hohlzylindrisches Bauteil ausgeführt, wobei ein hohlzylindrischer Abschnitt auf einer Seite den Flansch aufweist.

Bevorzugt weist das Verschlusselement an einer in den Innenraum gewandten Seite eine dritte sphärische Lagerfläche auf, die auf einem Krümmungsradius basiert, der einem Krümmungsradius der zweiten sphärischen Lagerfläche entspricht, so dass sich die zweite sphärische Lagerfläche und die dritte sphärische Lagerfläche zumindest bereichsweise ergänzen. Folglich bilden das Hohlkugelelement und das Verschlusselement zusammen eine vergrößerte sphärische Lagerfläche. Hierdurch kann die Lagerung des Kugeleinsatzes dahingehend verbessert werden, dass die Schwenkbarkeit vergrößert wird, ohne dass zwangsläufig das Hohlkugelelement vergrößert werden muss.

Das Befestigungselement ist bevorzugt länglich und die zweiten Eingriffsmittel sind ausschließlich auf zwei einander gegenüberliegenden Längsseiten angeordnet, wobei die ersten Eingriffsmittel in der Öffnung komplementär dazu angeordnet sind, so dass durch Verdrehen des Befestigungselements um eine Längsachse ein Eingriff herstellbar oder lösbar ist. Die ersten und zweiten Eingriffsmittel können beispielsweise in Form einer Verzahnung ausgeführt sein. Die Verzahnung kann eine rillenförmige Struktur darstellen. Eine Art Gewindesteigung ist möglich, jedoch nicht erforderlich. Durch diese Anordnung ergeben sich in den Profilquerschnitten des Befestigungselements sowie der Öffnung zwei einander gegenüberliegende, diskrete, verzahnte Abschnitte. Die Öffnung in dem Kugeleinsatz ist dabei so bemessen, dass sich das Befestigungselement um seine Längsachse in der Öffnung drehen lässt und nur in der zweiten Drehposition ein Eingriff mit den ersten Eingriffsmitteln erfolgt. In der ersten Drehposition liegen die zweiten Eingriffsmittel des Befestigungselements in den Zwischenräumen der Öffnung zwischen den ersten Eingriffsmitteln. Dadurch ist ein freies, ungehindertes Einstecken entlang der Längsachse des Befestigungselements und der Öffnung denkbar.

Beim Einnehmen der zweiten Drehposition sind diese Zwischenräume frei. Bevorzugt weist die Befestigungsvorrichtung mindestens einen Sicherungsstift auf, der in der zweiten Drehposition des Befestigungselements zwischen einer Innenkontur der Öffnung des Kugeleinsatzes und dem Befestigungselement einsteckbar ist. Dadurch wird dieser Zwischenraum weitgehend ausgefüllt und das Rückdrehen des Befestigungselements in die erste Drehposition wird dadurch verhindert. Der Sicherungsstift stellt folglich eine Sicherung zum Verhindern des Lösens des Befestigungselements dar, die mechanisch besonders einfach aufgebaut ist.

Der Sicherungsstift ist in einer vorteilhaften Ausführungsform dazu ausgebildet, beim Einstecken in die Öffnung elastisch verformt zu werden und eine kraftschlüssige und/oder formschlüssige Verbindung mit der Öffnung und/oder dem Befestigungselement einzugehen. Durch diese elastische Verformbarkeit wird gleichzeitig ein versehentliches Lösen des Sicherungsstiftes selbst verhindert. Der Sicherungsstift kann sich hierbei etwa in der Öffnung verkeilen.

Bevorzugt weist das Befestigungssystem zwei Befestigungsvorrichtungen auf, wobei das Befestigungselement sich durch die Öffnungen der Kugeleinsätze beider Befestigungsvorrichtungen erstreckt. Damit können die Vorteile der Befestigungsvorrichtungen sowohl an dem strukturfesten Flächenelement als auch an dem Einbauelement genutzt werden und weiterhin kann ein Toleranzausgleich durch entsprechendes Eingreifen der ersten Eingriffsmittel und der zweiten Eingriffsmittel an zwei Bereichen des Befestigungselements erfolgen.

Die Aufgabe wird ferner gelöst durch eine Kabine für ein Fahrzeug, aufweisend mindestens ein Flächenelement und mindestens ein Einbauelement, das über das vorangehend genannte Befestigungssystem mit dem mindestens einen Flächenelement verbunden ist, wobei das Flächenelement hierzu einen Ausschnitt zur Aufnahme der mindestens einen Befestigungsvorrichtung aufweist.

Die Erfindung betrifft ferner ein Fahrzeug mit einer solchen Kabine. In einer vorteilhaften Ausführungsform ist das Fahrzeug ein Flugzeug.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.
Fig. 1a und 1b zeigen eine Befestigungsvorrichtung an einem Flächenelement mit einem Befestigungselement.
Fig. 2a, 2b und 2c zeigen eine Draufsicht (Fig. 2a), und zwei unterschiedliche vertikale Schnittdarstellungen (Fig. 2b und 2c).
Fig. 3 zeigt ein Befestigungssystem mit zwei Befestigungsvorrichtungen in einer sehr schematischen Darstellung.
Fig. 4 zeigt ein Flugzeug mit einer Kabine sowie einem darin angeordneten Einbauelement, welches über ein erfindungsgemäßes Befestigungssystem in der Kabine befestigt ist.

### DETAILLIERTE DARSTELLUNG EXEMPLARISCHER AUSFÜHRUNGSFORMEN

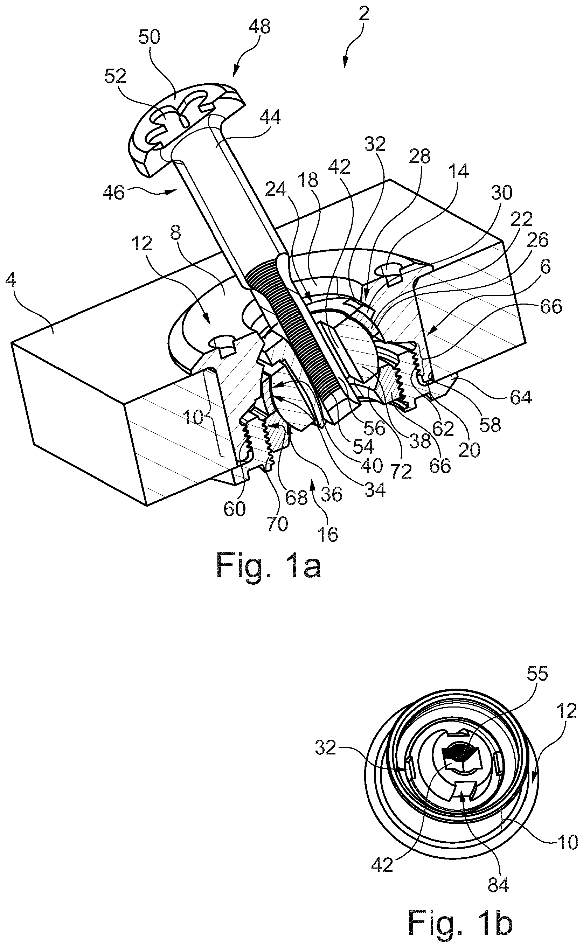

Fig. 1a und 1b zeigen eine erfindungsgemäße Befestigungsvorrichtung 2 in einer dreidimensionalen Schnittdarstellung. In Fig. 1b wird ein Teil der Befestigungsvorrichtung 2 von unten gezeigt. Zur Illustration ist die Befestigungsvorrichtung 2 in ein Flächenelement 4 integriert, das beispielsweise ein Boden- oder Wandelement in einer Kabine eines Fahrzeugs sein kann. Hierzu weist das Flächenelement 4 einen Ausschnitt 6 auf, in dem ein Flanschgehäuse 8 angeordnet ist. Das Flanschgehäuse 8 weist einen hohlzylindrischen Abschnitt 10 auf, an den sich ein ringförmiger Flansch 12 anschließt. Der hohlzylindrische Abschnitt 10 ist vollständig in die Ausnehmung 6 eingeschoben, so dass der Flansch 12 auf dem Flächenelement 4 aufliegt. Exemplarisch weist der Flansch 12 auf einer von dem Flächenelement 4 abgewandten Seite Betätigungsmittel 14 auf, in die ein Werkzeug einsteckbar ist, um das Flanschgehäuse 8 drehen bzw. in einer festen Drehposition halten zu können.

In dem Flanschgehäuse 8 ist ein Innenraum 16 gebildet, der in einer Durchführöffnung 18 in dem Flansch 12 und einer davon entgegengesetzt angeordneten Aufbauöffnung 20 mündet.

In dem Innenraum 16 ist ein Hohlkugelelement 22 angeordnet, das eine äußere Oberfläche 24 aufweist, die kugelförmig gekrümmt ist. Hiermit korrespondiert eine erste sphärische Lagerfläche 26, an der die äußere Oberfläche 24 des Hohlkugelelements 22 im Flächenkontakt gehalten wird. Das Hohlkugelelement 22 kann durch die korrespondierende Formgebung an der ersten sphärischen Lagerfläche 26 bewegt werden.

Eine erste Führungseinrichtung 28 in Form eines Vorsprungs 30 und einer damit korrespondierenden Vertiefung 32 in dem Flanschgehäuse 8 kann jedoch die Beweglichkeit der Hohlkugel 22 in dem Innenraum 16 eingeschränkt werden. Die erste Führungseinrichtung 28 ist an zwei einander gegenüberliegenden Seiten der Hohlkugel 22 angeordnet, so dass hierdurch eine Schwenkebene definiert ist. In dieser Darstellung ist lediglich eine erste Führungseinrichtung 28 sichtbar, diese wird jedoch auf den nachfolgenden Zeichnungen gezeigt.

Das Hohlkugelelement 22 weist innenseitig eine zweite sphärische Lagerfläche 34 auf, die mit einer äußeren Oberfläche 36 eines Kugeleinsatzes 38 korrespondiert. Der Kugeleinsatz 38 ist folglich in dem Hohlkugelelement 22 schwenkbar gelagert und weist hierzu eine äußere Oberfläche 40 auf, die ebenfalls kugelförmig gekrümmt ist. Ferner ist dort eine Öffnung 42 vorhanden, in die ein Befestigungselement 44 einsteckbar ist. Der Kugeleinsatz 38 besitzt eine hier nicht sichtbare zweite Führungseinrichtung, welche die Schwenkbewegung des Kugeleinsatzes 38 analog zu der ersten Führungseinrichtung 28 beschränkt. Die Schwenkachsen des Hohlkugelelements 22 und des Kugeleinsatzes 38 sind senkrecht zueinander angeordnet.

Das Befestigungselement 44 ist wie ein Schraubbolzen gestaltet und weist folglich einen Schaft 46 auf, der sich durch die Öffnung 42 erstreckt. Ein Befestigungsende 48 des Befestigungselements 44 weist einen Kopf 50 auf, der mit einer profilierten Vertiefung 52 zum Verbinden mit einem Werkzeug ausgestattet ist. An einem dem Kopf 50 entgegengesetzten Ende sind zweite Eingriffsmittel 54 an zwei einander gegenüberliegenden Längsseiten angeordnet, wobei die zwischen den zweiten Eingriffsmitteln 54 liegenden Bereiche des Befestigungselements 44 in Form abgeflachter Flanken 56 realisiert sind. In dieser Darstellung sind erste Eingriffsmittel in dem Kugeleinsatz 38 nicht sichtbar, werden jedoch ebenfalls in den nachfolgenden Zeichnungen dargestellt.

Das Flanschgehäuse 8 ist über eine Flanschmutter 58 an dem Flächenelement angeordnet. Hierzu weist das Flanschgehäuse 8 ein erstes Innengewinde 60 auf, das mit einem ersten Außengewinde 62 der Flanschmutter 58 korrespondiert. Durch Anordnen eines Flansches 64 an einem ansonsten hohlzylindrischen Abschnitt 66 kann die Flanschmutter 58 in das Flanschgehäuse 8 eingeschraubt werden, bis der Flansch 64 an dem Flächenelement 4 aufliegt. Hierdurch wird die Befestigungsvorrichtung 2 an dem Flächenelement 4 vollständig form- und kraftschlüssig integriert. Das Flächenelement 4 wird von den beiden Flanschen 12 und 64 zangenartig auf einem ringförmigen Rand zangenartig umgriffen.

Zum Befestigen bzw. Halten der in dem Innenraum 16 angeordneten Komponenten ist ein Verschlusselement 66 vorgesehen, das ringförmig gestaltet in die Verschlussmutter 58 geschraubt werden kann. Hierzu weist das Verschlusselement 66 ein zweites Außengewinde 68 auf, das mit einem zweiten Innengewinde 70 korrespondiert. Zusätzlich weist das Verschlusselement 66 eine ringförmig ausgebildete, dritte sphärische Lagerfläche 72 auf, die auf einem Krümmungsradius basiert, der einem Krümmungsradius der zweiten sphärischen Lagerfläche 40 der Hohlkugel 22 entspricht. Das Hohlkugelelement 22 wird folglich an einer Unterseite, das heißt von dem Flansch 12 abgewandt, der Befestigungsvorrichtung 2 ergänzt. Wie in Fig. 1a und 1b ersichtlich ist, kann auch die Schwenkbewegung des Hohlkugelelements 22 durch einen erzwungenen Flächenkontakt mit dem Verschlusselement 66 begrenzt werden.

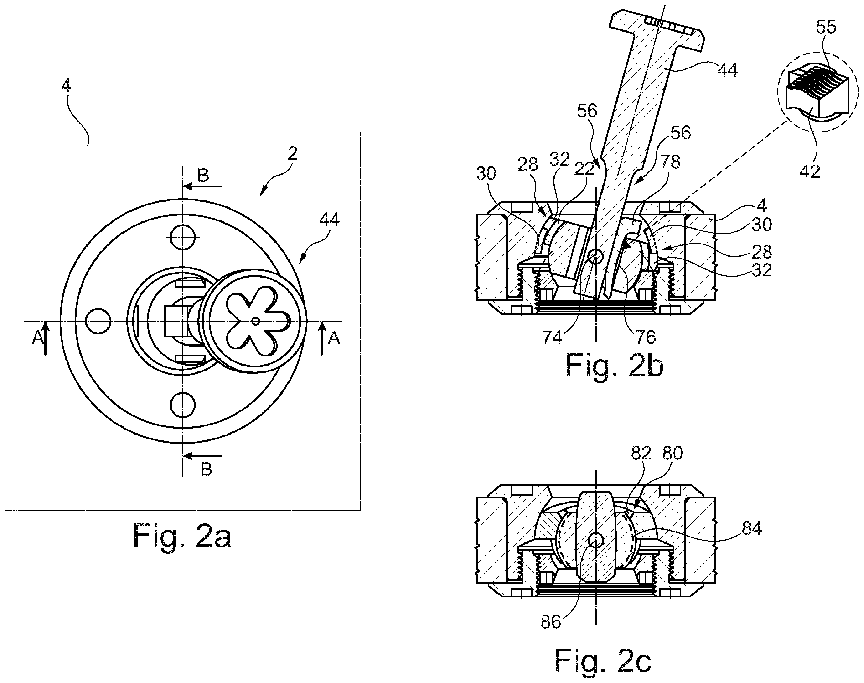

Die weiteren Zusammenhänge sind den nachfolgenden Figuren zu entnehmen. Fig. 2a zeigt die Befestigungsvorrichtung 2 in einer Draufsicht. Hier ist ersichtlich, dass das Befestigungselement 44 zu einer Seite schräg ausgerichtet ist. Dies könnte beispielsweise dann auftreten, wenn ein Einbauelement, das an dem Flächenelement 4 zu befestigen ist, nicht über einen vordefinierten, festen Punkt des Flächenelements 4 anbringbar ist, sondern sich das Befestigungselement 44 von dem Einbauelement schräg zu dem nächsten, vordefinierten festen Punkt des Flächenelements 4 erstreckt. Es sind zwei Schnittebenen A-A und B-B markiert, welche in den Fig. 2b (Schnitt A-A) und Fig. 2c (Schnitt B-B) ausgeführt sind. In diesen Figuren wird nicht vollständig auf jedes Element eingegangen, was zuvor bereits erwähnt wurde. Lediglich die in der Darstellung der Fig. 1a und 1b fehlenden Elemente werden hier etwas eingehender beleuchtet.

In Fig. 2b ist eine erste Führungseinrichtung 28 mit einem Vorsprung 30 und einer Nut 32 zu sehen. Auf der gegenüberliegenden Seite des Hohlkugelelements 22 ist eine weitere erste Führungseinrichtung 28 ebenso mit einem Vorsprung 30 und einer Nut 32 ersichtlich. Hierdurch kann die mögliche Schwenkbewegung des Hohlkugelelements 22 ausschließlich auf eine erste Schwenkachse 74 beschränkt werden.

In dieser Darstellung ist ferner die abgeflachte Form des Befestigungselements 44 ersichtlich, denn in dieser Perspektive sind nur die Flanken 56 erkennbar. Zwischen einer Innenkontur 76 und der abgeflachten Flanke 56 in der Zeichnungsebene rechts entsteht ein Zwischenraum, wenn das Befestigungselement 44 in der zweiten Drehposition liegt. Dieser Zwischenraum ist hier durch einen Sicherungsstift 78 ausgefüllt. Dieser könnte elastisch verformbar sein und eine gewisse Vorspannung besitzen. Durch das Eindrücken des Sicherungsstifts 78 zwischen die Flanke 56 und die Innenkontur 76 des Kugeleinsatzes wird der Sicherungsstift 78 zumindest stellenweise stark gestaucht, so dass seine Position gesichert wird.

In Fig. 2c ist der Schnitt B-B gezeigt, in dem erste Eingriffsmittel 55 in der Öffnung 42 ersichtlich sind. Weiterhin sind zwei einander gegenüberliegend angeordnete zweite Führungseinrichtungen 80 mit Vorsprüngen 82 und Nuten 84 zu sehen. Durch diese wird die Schwenkbewegung des Kugeleinsatzes 38 auf eine zweite Schwenkachse 86 beschränkt, welche senkrecht zu der ersten Schwenkachse 74 liegt. Insgesamt kann bei befestigtem Befestigungselement 44 dieses eine Bewegung in beliebige Richtungen durchführen. Allerdings ist es nicht möglich, das Hohlkugelelement 22 oder den Kugeleinsatz 38 um ihre eigene Achse zu drehen. Dadurch wird dem Befestigungselement 44 ermöglicht, von außen in die Öffnung 42 des Kugeleinsatzes 38 eingeführt zu werden, um anschließend ohne eine separate Sicherung der Position des Kugeleinsatzes 38 oder des Hohlkugelelements 22 eine Rotation des Befestigungselements durchzuführen.

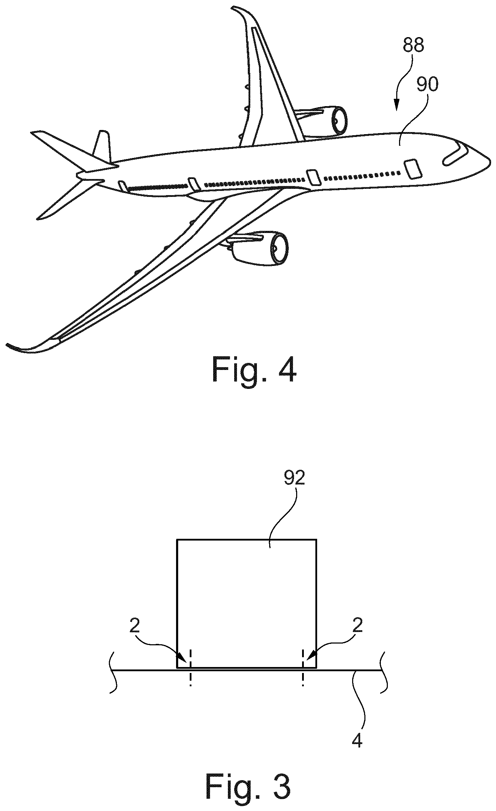

Fig. 3 zeigt eine sehr schematische Darstellung eines Befestigungssystems 85 mit Hilfe zweier Befestigungsvorrichtungen 2 und einem Befestigungselement, durch das ein Einbauelement 92 an einem Flächenelement 4 anbringbar ist.

Fig. 4 zeigt schließlich eine Kabine 88 in einem Flugzeug 90, in der ein Einbauelement angeordnet ist, das mit mindestens einer erfindungsgemäßen Befestigungsvorrichtung 2 befestigt ist.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Befestigungssystem (85) zum Befestigen von Einbauelementen (92) in einer Kabine (90) eines Fahrzeugs (88), mit einem Befestigungselement (44) und mindestens einer Befestigungsvorrichtung (2), die Befestigungsvorrichtung (2) aufweisend:
- ein Flanschgehäuse (8) mit einem darin ausgebildeten Innenraum (16),
- ein Verschlusselement (58),
- ein in den Innenraum (16) des Flanschgehäuses (8) einsetzbares Hohlkugelelement (22), und
- einen in das Hohlkugelelement (22) einsetzbaren Kugeleinsatz (38) mit einer erste Eingriffsmittel (55) aufweisenden Öffnung (42),
wobei der Innenraum (16) des Flanschgehäuses (8) eine erste sphärische Lagerfläche (26) aufweist, die zum Verschwenken des Hohlkugelelements (22) mit einer äußeren Oberfläche (24) des Hohlkugelelements (22) korrespondierend ausgebildet ist, wobei eine erste Führungseinrichtung (28) das Verschwenken ausschließlich um eine erste Schwenkachse (74) erlaubt,
wobei das Hohlkugelelement (22) innenseitig eine zweite sphärische Lagerfläche (34) aufweist, die zum Verschwenken des Kugeleinsatzes (38) mit einer äußeren Oberfläche (36) des Kugeleinsatzes (38) korrespondierend ausgebildet ist, wobei eine zweite Führungseinrichtung (80) das Verschwenken ausschließlich um eine zweite Schwenkachse (86) erlaubt,
wobei das Verschlusselement (58) den Innenraum (16) zumindest abschnittsweise derart verschließt, dass das Hohlkugelelement (22) in dem Innenraum (16) gehalten wird,
wobei das Befestigungselement (44) in den Kugeleinsatz (38) einsteckbar ist und zweite Eingriffsmittel (54) aufweist, und
wobei die ersten und zweiten Eingriffsmittel (55, 54) derart ausgebildet sind, dass das Befestigungselement in einer ersten Drehposition frei in die Öffnung (42) steckbar ist und in einer zweiten Drehposition die ersten und zweiten Eingriffsmittel (55, 54) ineinander eingreifen.

2. Befestigungssystem (85) nach Anspruch 1, wobei die erste Schwenkachse (74) und die zweite Schwenkachse (86) senkrecht zueinander stehen.

3. Befestigungssystem (85) nach Anspruch 1 oder 2, wobei die erste Schwenkachse (74) und die zweite Schwenkachse (86) senkrecht zu einer Haupterstreckungsrichtung der Öffnung (42) des Kugeleinsatzes (38) stehen.

4. Befestigungssystem (85) nach einem der vorhergehenden Ansprüche, ferner aufweisend eine Flanschmutter (58) mit einem ersten Außengewinde (62), die in ein erstes Innengewinde (60) des Flanschgehäuses (8) einschraubbar ist, so dass das Flanschgehäuse (8) und die Flanschmutter (58) in einem Ausschnitt eines Flächenbauteils (4) befestigbar sind.

5. Befestigungssystem (85) nach einem der vorhergehenden Ansprüche, wobei das Verschlusselement (66) an einer in den Innenraum (16) gewandten Seite eine dritte sphärische Lagerfläche (72) aufweist, die auf einem Krümmungsradius basiert, der einem Krümmungsradius der zweiten sphärischen Lagerfläche (40) entspricht, so dass sich die zweite sphärische Lagerfläche (40) und die dritte sphärische Lagerfläche (72) zumindest bereichsweise ergänzen.

6. Befestigungssystem (85) nach einem der vorhergehenden Ansprüche, wobei das Verschlusselement (66) im Wesentlichen ringförmig ausgestaltet ist und ein zweites Außengewinde (68) aufweist, das mit einem zweiten Innengewinde (70) korrespondiert, welches symmetrisch zu dem Innenraum (16) angeordnet ist.

7. Befestigungssystem (85) nach einem der vorhergehenden Ansprüche, wobei das Befestigungselement (44) länglich ist und die zweiten Eingriffsmittel (54) ausschließlich auf zwei einander gegenüberliegende Längsseiten angeordnet sind, wobei die ersten Eingriffsmittel (55) in der Öffnung (42) komplementär dazu angeordnet sind, so dass durch Verdrehen des Befestigungselements (44) um eine Längsachse ein Eingriff herstellbar oder lösbar ist.

8. Befestigungssystem (85) nach Anspruch 7, ferner aufweisend mindestens einen Sicherungsstift (78), der in der zweiten Drehposition des Befestigungselements (44) zwischen eine Innenkontur (76) der Öffnung (42) des Kugeleinsatzes (38) und dem Befestigungselement (44) einsteckbar ist.

9. Befestigungssystem (85) nach Anspruch 8, wobei der Sicherungsstift (78) dazu ausgebildet ist, beim Einstecken in die Öffnung (42) elastisch verformt zu werden und eine kraftschlüssige und/oder formschlüssige Verbindung mit der Öffnung (42) und/oder dem Befestigungselement (44) einzugehen.

10. Befestigungssystem (85) nach einem der vorhergehenden Ansprüche, das zwei Befestigungsvorrichtungen (2) aufweist, wobei das Befestigungselement (44) sich durch die Öffnungen (42) der Kugeleinsätze (38) beider Befestigungsvorrichtungen (2) erstreckt.

11. Kabine (90) für ein Fahrzeug (88), aufweisend mindestens ein Flächenelement (4) und mindestens ein Einbauelement (92), das über das Befestigungssystem (85) nach einem der Ansprüche 1 bis 10 mit dem mindestens einen Flächenelement (4) verbunden ist.

12. Fahrzeug (88) mit einer Kabine (90) nach Anspruch 11.

13. Fahrzeug (88) nach Anspruch 12, wobei das Fahrzeug (88) ein Flugzeug (88) ist.

## Claims

1. A fastening system (85) for fastening installation elements (92) in a cabin (90) of a vehicle (88), having a fastening element (44) and at least one fastening device (2), comprising the fastening device (2)
- a flanged housing (8) having an interior (16) formed therein,
- a closure element (58),
- a hollow ball element (22) which can be inserted into the interior (16) of the flange housing (8), and
- a ball insert (38) insertable into the hollow ball element (22) with an opening (42) having first engagement means (55)
wherein the interior (16) of the flanged housing (8) has a first spherical bearing surface (26) which, for pivoting the hollow ball element (22), is designed to correspond with an outer surface (24) of the hollow ball element (22), a first guide device (28) allowing pivoting exclusively about a first pivot axis (74),
wherein the hollow ball element (22) has on the inside a second spherical bearing surface (34) which is designed to correspond with an outer surface (36) of the ball insert (38) for pivoting the ball insert (38), wherein a second guide device (80) permits pivoting exclusively about a second pivot axis (86),
wherein the closure element (58) closes the interior (16) at least in sections in such a way that the hollow ball element (22) is held in the interior (16),
the fastening element (44) being insertable into the ball insert (38) and having second engagement means (54), and
wherein the first and second engagement means (55, 54) are formed such that in a first rotational position the fastening element can be freely inserted into the opening (42) and in a second rotational position the first and second engagement means (55, 54) engage one another.

2. Fastening system (85) according to claim 1, wherein the first pivot axis (74) and the second pivot axis (86) are perpendicular to each other.

3. Fastening system (85) according to claim 1 or 2, wherein the first pivot axis (74) and the second pivot axis (86) are perpendicular to a main direction of extension of the opening (42) of the ball insert (38).

4. Fastening system (85) according to any of the foregoing claims, further comprising a flange nut (58) having a first external thread (62) and being screwable into a first internal thread (60) of the flange housing (8) so that the flange housing (8) and the flange nut (58) are fastenable in a cutout of a surface member (4).

5. Fastening system (85) according to one of the preceding claims, wherein the closure element (66) has a third spherical bearing surface (72) on a side facing into the interior (16), which is based on a radius of curvature corresponding to a radius of curvature of the second spherical bearing surface (40), so that the second spherical bearing surface (40) and the third spherical bearing surface (72) complement each other at least in some areas.

6. Fastening system (85) according to one of the preceding claims, wherein the closure element (66) is substantially annular in shape and has a second external thread (68) which corresponds to a second internal thread (70) which is arranged symmetrically to the interior (16).

7. Fastening system (85) according to one of the preceding claims, wherein the fastening element (44) is elongate and the second engagement means (54) are arranged exclusively on two opposite longitudinal sides, the first engagement means (55) being arranged in the opening (42) in a complementary manner such that engagement can be established or released by rotating the fastening element (44) about a longitudinal axis.

8. Fastening system (85) according to claim 7, further comprising at least one locking pin (78) insertable between an inner contour (76) of the opening (42) of the ball insert (38) and the fastening element (44) in the second rotational position of the fastening element (44).

9. Fastening system (85) according to claim 8, wherein the locking pin (78) is designed to be elastically deformed when inserted into the opening (42) and to enter into a non-positive and/or positive connection with the opening (42) and/or the fastening element (44).

10. Fastening system (85) according to one of the preceding claims, comprising two fastening devices (2), the fastening element (44) extending through the openings (42) of the ball inserts (38) of both fastening devices (2).

11. A cabin (90) for a vehicle (88) comprising at least one panel element (4) and at least one installation element (92) connected to the at least one panel element (4) by the fastening system (85) according to any one of claims 1 to 10.

12. A vehicle (88) having a cabin (90) according to claim 11.

13. A vehicle (88) according to claim 12, wherein the vehicle (88) is an aircraft (88).

## Revendications

1. Un système de fixation (85) pour la fixation d'éléments de montage (92) dans une cabine (90) d'un véhicule (88), comportant un élément de fixation (44) et au moins un dispositif de fixation (2), comprenant le dispositif de fixation (2) :
- un boîtier à bride (8) dans lequel est formé un intérieur (16),
- un élément de fermeture (58),
- un élément sphérique creux (22) pouvant être inséré à l'intérieur (16) du boîtier à bride (8), et
- un insert à bille (38) pouvant être inséré dans l'élément à bille creux (22) avec une ouverture (42) ayant des premiers moyens d'engagement (55),
dans lequel l'intérieur (16) du boîtier à bride (8) présente une première surface d'appui sphérique (26) qui, pour le pivotement de l'élément sphérique creux (22), est conçue pour correspondre à une surface extérieure (24) de l'élément sphérique creux (22), un premier dispositif de guidage (28) permettant le pivotement exclusivement autour d'un premier axe de pivotement (74),
dans lequel l'élément sphérique creux (22) présente à l'intérieur une deuxième surface d'appui sphérique (34) qui, pour le pivotement de l'insert sphérique (38), est conçue de manière à correspondre à une surface extérieure (36) de l'insert sphérique (38), dans lequel un deuxième dispositif de guidage (80) permet le pivotement exclusivement autour d'un deuxième axe de pivotement (86),
dans lequel l'élément de fermeture (58) ferme l'intérieur (16) au moins par sections de telle sorte que l'élément sphérique creux (22) est maintenu à l'intérieur (16),
l'élément de fixation (44) pouvant être inséré dans l'insert à bille (38) et comportant un second moyen d'engagement (54), et
dans lequel les premier et second moyens d'engagement (55, 54) sont conçus de telle sorte que, dans une première position de rotation, l'élément de fixation peut être librement inséré dans l'ouverture (42) et que, dans une seconde position de rotation, les premier et second moyens d'engagement (55, 54) s'engagent l'un dans l'autre.

2. Système de fixation (85) selon la revendication 1, dans lequel le premier axe de pivot (74) et le deuxième axe de pivot (86) sont perpendiculaires l'un à l'autre.

3. Système de fixation (85) selon la revendication 1 ou 2, dans lequel le premier axe de pivot (74) et le deuxième axe de pivot (86) sont perpendiculaires à une direction principale d'extension de l'ouverture (42) de l'insert à bille (38).

4. Système de fixation (85) selon l'une des revendications précédentes, comprenant en outre un écrou de bride (58) ayant un premier filetage externe (62) et pouvant être vissé dans un premier filetage interne (60) du logement de bride (8) de sorte que le logement de bride (8) et l'écrou de bride (58) peuvent être fixés dans une découpe d'un élément de surface (4).

5. Système de fixation (85) selon l'une des revendications précédentes, dans lequel l'élément de fermeture (66) présente sur un côté tourné vers l'intérieur (16) une troisième surface d'appui sphérique (72), qui repose sur un rayon de courbure correspondant à un rayon de courbure de la deuxième surface d'appui sphérique (40), de sorte que la deuxième surface d'appui sphérique (40) et la troisième surface d'appui sphérique (72) se complètent au moins par endroits.

6. Système de fixation (85) selon l'une des revendications précédentes, dans lequel l'élément de fermeture (66) est de forme sensiblement annulaire et présente un deuxième filetage extérieur (68) qui correspond à un deuxième filetage intérieur (70) qui est disposé symétriquement par rapport à l'intérieur (16).

7. Système de fixation (85) selon l'une des revendications précédentes, dans lequel l'élément de fixation (44) est allongé et les seconds moyens d'engagement (54) sont disposés exclusivement sur deux côtés longitudinaux opposés, les premiers moyens d'engagement (55) étant disposés dans l'ouverture (42) de manière complémentaire de telle sorte que l'engagement peut être établi ou libéré en faisant tourner l'élément de fixation (44) autour d'un axe longitudinal.

8. Système de fixation (85) selon la revendication 7, comprenant en outre au moins une broche de verrouillage (78) pouvant être insérée entre un contour intérieur (76) de l'ouverture (42) de l'insert à bille (38) et l'élément de fixation (44) dans la deuxième position de rotation de l'élément de fixation (44).

9. Système de fixation (85) selon la revendication 8, dans lequel la goupille de sécurité (78) est conçue pour être déformée élastiquement lors de l'insertion dans l'ouverture (42) et pour entrer en liaison par force et/ou par forme avec l'ouverture (42) et/ou l'élément de fixation (44).

10. Système de fixation (85) selon l'une des revendications précédentes, qui comporte deux dispositifs de fixation (2), l'élément de fixation (44) s'étendant à travers les ouvertures (42) des inserts à bille (38) des deux dispositifs de fixation (2).

11. Un cabine (90) pour un véhicule (88), comprenant au moins un élément de panneau (4) et au moins un élément d'installation (92) qui est relié à l'au moins un élément de panneau (4) par le système de fixation (85) conformément à l'une des revendications précédentes 1 à 10.

12. Un véhicule (88) ayant une cabine (90) selon la revendication 11.

13. Véhicule (88) selon la revendication 12, dans lequel le véhicule (88) est un avion (88).
